# EUROPEAN PATENT SPECIFICATION

(11) **EP 2 790 101 B1**
(45) Date of publication and mention of the grant of the patent: **20.01.2016**
(21) Application number: 13163147.5
(22) Date of filing: 10.04.2013
(51) Int. Cl.: G06F 9/455, G05B 19/418

(54) **System and method for automated virtual commissioning of an industrial automation system**
System und Verfahren zur automatischen virtuellen Inbetriebnahme eines industriellen Automatisierungssystems
Système et procédé de mise en service automatisée virtuelle d'un système d'automatisation industrielle

(43) Date of publication of application: 15.10.2014
(73) Proprietor: ABB Technology AG, 8050 Zürich (CH)
(72) Inventor: Hoernicke, Mario, 76829 Landau (DE); Barth, Mike, 76275 Ettlingen (DE); Royston, Steve, Bedfordshire SG18 8JL (GB)
(74) Representative: Kock, Ina

(56) References cited:
- EP-A1- 2 508 954
- EP-A1- 2 527 936
- HOERNICKE M ET AL: "Effizientes Testen heterogener Leitsystemkonfigurationen. Integration gewerkeübergreifender Hardware-Emulatoren", AUTOMATISIERUNGSTECHNISCHE PRAXIS - ATP, OLDENBOURG INDUSTRIEVERLAG, MUNCHEN, DE, no. 11, 1 November 2012 (2012-11-01), pages 46-54, XP009171585, ISSN: 0178-2320
- MAHALIK N G P C ET AL: "Design and development of system level software tool for DCS simulation", ADVANCES IN ENGINEERING SOFTWARE, ELSEVIER SCIENCE, OXFORD, GB, vol. 34, no. 7, 1 July 2003 (2003-07-01), pages 451-465, XP002575547, ISSN: 0965-9978, DOI: 10.1016/S0965-9978(03)00031-0 [retrieved on 2003-04-08]

## Description

The invention relates to a system and method for automated commissioning of an industrial automation system.

An industrial automation system typically comprises a distributed control system and at least one automation system server, where the distributed control system (DCS) is a control system consisting of multiple control devices which are distributed throughout an industrial plant. The industrial plant may belong to different industry sectors, such as the process industry like pharmaceutical and chemical industry, or the discrete manufacturing industry, or the mineral and oil and gas industry, or the power generation industry. The DCS comprises at least two industrial control devices, each of them being arranged to control operation of a respective actuating part of the industrial plant during a production or manufacturing process of the industrial plant, where the actuating parts may for example be single actuators such as a motor, a pump, a valve or a switch, or groups of actuators or a whole operational section of the industrial plant. The DCS further comprises at least one data communication means arranged to connect each of the at least two industrial control devices with at least the respective actuating part of the industrial plant. The data communication means are preferably wire-bound or wireless field busses, applying protocols such as Foundation Fieldbus, Profibus and Profinet or IEC61850.

The automation system servers are computer appliances of different types, each type dedicated to a specific operational aspect of the DCS. With the term "computer appliance" it is meant that the system server is preinstalled, preconfigured and ready to be used for its specific purpose. Examples for automation system server types are: a database server for providing in a central configuration database the necessary information required to configure the industrial automation system; a connectivity servers for ensuring the data communication to and from industrial control devices and data communication means of different types and vendors, thereby integrating these different devices and communication means into one and the same industrial automation system; and an application server used as intermediary processing and/or data storage device for decoupling or decentralization purposes.

The term "engineering" is used in the following to describe all kinds of activities related to the designing, verification, validation and testing of parts or the whole industrial automation system. The term "commissioning" means to put the industrial automation system into operation at the production site, i.e. in the industrial plant.

Accordingly, before a new or amended industrial automation system is commissioned, its parts need to be engineered, where the engineering is based on a definition of the fundamental requirements and expected results of the production process to be automated.

Today, during engineering, the hardware for the automation system servers and for the distributed control system is designed and assembled. Further, the application software of the industrial automation system, including control code, human machine interfaces (HMI) and alarm management software is developed, where part of the development is performed directly on the corresponding automation system servers. The engineering of the hardware parts and of the application software can thereby be performed at different engineering locations

Afterwards, integration tests and so called Factory Acceptance Tests (FAT) are to be performed. To this end, the hardware of the DCS as well as the automation system servers and further application software which is not yet installed on the automation system servers, are delivered to a testing site. There, the further application software is downloaded to the respective parts of the distributed control system. During integration test, it is tested whether the application software and the automation system servers fit with the hardware and fulfill the requirements for the industrial automation system. As it is usually not possible and feasible to provide all the hardware of the industrial automation system at the testing site down to the last part, it is known to emulate the required functions of missing parts of the hardware, e.g. of missing instruments or intelligent field devices. In rare cases, a simulation of the production process is used to mimic the process behavior and provide a dynamic testing environment.

When the tests are completed successfully, the hardware of the DCS and the automation system servers are shipped from the testing site to the industrial plant and are integrated with the rest of the instruments and other hardware, such as field bus and power cabling. Then, final tests, like Site Acceptance Tests (SAT) and Site Integration Tests (SIT), are performed.

There are multiple drawbacks involved in this common approach for engineering and commissioning an industrial automation system. The effort for handling the hardware parts is considerable, as they need to be staged, transported, and installed twice: once for testing and once for commissioning on site. For the integration tests and FAT, special simulation and emulation servers are required in order to imitate the missing hardware, where these special simulation and emulation servers require additional configuration, administration and maintenance effort. Due to the above named efforts, the time elapsing between start and end of an automation project may become an issue, as the hardware of the industrial automation system may be already outdated before it is shipped to the production site.

A further drawback lies in the fact that once the installation and commissioning has been done and production has started, no further engineering activities involving the industrial automation system are possible. This is of particular disadvantage, if the industrial automation system needs to be amended or extended, since testing of the interaction of new hardware components with the existing industrial automation system can only be performed directly on the production site. This may result in downtime of the industrial plant.

In an article by M. Hoernicke et al: "Effizientes Testen heterogener Leitsystemkonfigurationen", it is described that during FAT of a DCS emulation is used for those parts of the DCS which are not available in hardware and simulation is used in order to reproduce the dynamic behavior of the production process performed in the industrial plant. The emulation of the elements of the DCS is performed by executing the original computer programs written for the control devices and the data communication means of the DCS on alternative hardware devices than the original hardware devices used in the industrial plant, where the alternative hardware devices mimic the computational and processing related behavior of the original hardware. The alternative hardware devices may for example be a so called emulating computer device having a higher processing power than a typical control device of the DCS, such as a PC versus a microcontroller. On this emulating computer device, several emulated control devices may be running in parallel. Accordingly, the control devices are emulated in software only, meaning that the processing related behavior of the control devices is imitated by appropriate software programs.

The alternative hardware devices may also be dedicated hardware emulators having the same physical input and output signals as the imitated control devices or data communication means of the DCS, i.e. a hardware emulator is a piece of hardware which mimics the behavior of the original piece of hardware. Such hardware emulators may be used in particular for emulating the data communication means of the DCS, such as field bus systems and I/O devices.

As a result, the above named article presents a combination of simulation and emulation which results in a so called digital factory that can be used as a test environment for FAT, and which would be available for later testing of new hardware components to be integrated in an existing DCS. However, emulation of automation system servers is not mentioned.

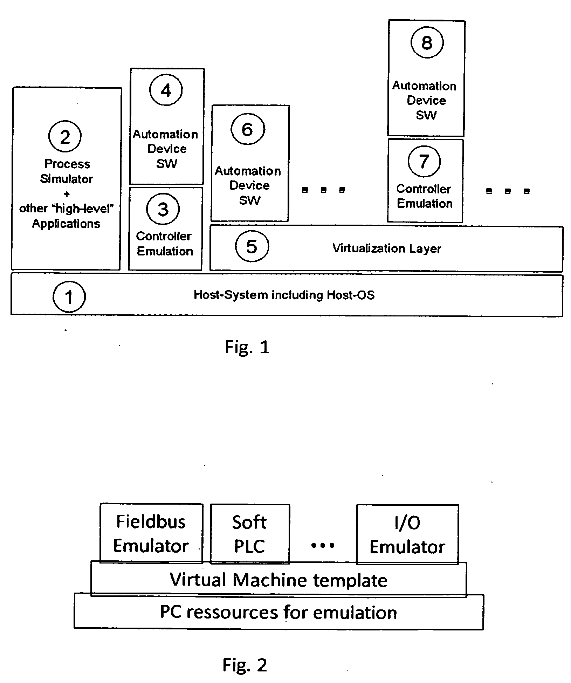

In DE 10 2010 025 954 A1, another approach for realizing a test environment for FAT of a DCS is presented, as is shown in appended Fig. 1. It is suggested to imitate each of the DCS elements on a host computer system through virtualization and/or emulation, in order to be able to simulate the DCS together with a simulation of the production process of the industrial plant on the host computer system. The hardware imitation is achieved by either emulating the physical hardware of the DCS elements directly on the host computer, where the emulated hardware is imitated in all details of its internal components and processing behavior including the provision of, for example, the complete instruction set of an emulated processor (reference 3 in Fig. 1). On the other hand, hardware can be virtualized by introducing on the host computer a virtualization layer in the form of a virtual machine, where the behavior of the DCS hardware is imitated through mainly using the instruction set of the host computer and only imitating particular instructions which require specific processing activities usually not available on the host computer (reference 6). Even further, DE 10 2010 025 954 A1 suggests that the imitation of the processor of a control device may be provided in the form of a hardware emulator running inside the virtualization environment of the host computer system (reference 7). In the resulting simulation environment for the DCS, the original software programs or firmware may then be executed on their respectively imitated processors.

Commonly, the configuration of the above described versions of a digital factory is a highly manual process, as each virtual device and/or emulator has to be configured separately and individually. In large DCS with several sub-systems and a complex periphery, the virtual devices and/or emulators need to be adapted to one another as precisely as possible. Due to the necessary interconnection of the virtual devices and/or emulators, the resulting digital factory may achieve a complexity of almost the same degree as the real industrial plant.

The configuration is done based on the engineering results of the DCS, i.e. the virtual devices and/or emulators are configured with the engineering data generated during the designing, verification and validation of each individual element of the DCS. The pure emulation as presented in above cited article requires in addition that the emulating computer devices which finally execute the emulators are configured in hardware and software, in order to fit the requirements for each emulator instance. Besides that, the IT infrastructure needed to physically connect the hardware emulators and the emulating computer devices has to be maintained throughout the use of the digital factory.

Even further, the simulation model of the production processes is assembled manually. The model is integrated into a process model simulator and the connection between the emulators and the process model simulator is configured based on the engineering results, as well.

The described manual configuration of the digital factory involves a lot of effort, not only for the configuration but also for providing the test environment as such. In particular, since the test environment is hardly scalable, manual hardware adaptations may become necessary in case that during engineering more processing power, memory or external interfaces is required. After the FAT, the emulation and simulation infrastructure - which is fixedly adapted to the one digital factory - has to be deconstructed in order to get a clean environment for the next project. If during subsequent engineering steps, elements of the DCS are changed or added and therefore the engineering data are amended, a considerable amount of manual effort is required to implement such amendments in the digital factory in case that they result in the requirement of new emulators.

In order to overcome these drawbacks, the above cited article by Hoernicke et al. suggests integrating the different emulators of the digital factory in an overall virtual environment, so that the test environment becomes scalable and independent of any emulation hardware.

The concept presented in the article is based on the automatic generation of one or multiple virtual machines (VM), where in each of the virtual machines multiple emulators are instantiated. The virtual machines may then be freely distributed across multiple emulating computer devices in order to be executed, where the distribution is carried out using a particularly developed tool. An example for such a tool is given in EP 2 508 954 A1, named framework application.

In the article by Hoernicke et al, the automatic generation of virtual machines is based on one template of a virtual machine which is then duplicated as often as required. In the template, the different types of emulators required for the emulation of the control devices and the data communication means of the DCS are installed, as is shown in the example of Fig. 2. The term "Soft PLC" stands for an emulator for programmable logic controller which is implemented in pure software only.

In order to automatically generate the virtual machines and to instantiate the emulators, the article by M. Hoernicke et al. suggests that the required number of virtual machines is determined based on the DCS elements selected by a user and afterwards automatic generation of the test environment is executed. This leads to a major drawback of the whole approach, since the test environment is fixed and static once the user has initiated the automatic generation process. If a different set of DCS elements is to be simulated, the test environment can only be discarded as a whole and fully recreated from the beginning.

Patent document EP 2 527 936 A1 discloses a method involves establishing an indirect connection between a programming device, and an automation device by a conference server, which is provided spatially at a distance from an automation system. The server is provided with an access to virtual machines with engineering software. Remote designing of the machines is allowed. Soft copies of the machines are transmitted to the programming device. Engineering or project data is transmitted to the automation device by the server based on operator control actions at the programming device. The utilization of the virtual machines with the engineering software allows service personnel to select a locally situated data center, thus ensuring improved data throughput, reliable data protection and quick operation of the automation system. The method provides additional security relative to data management of the virtual machines.

Patent document EP 2 508 954 A1 discloses a system and a method for configuring a clustered simulation network using virtualization whereas a user configures the access to the main engineering personal computer (PC) being used for the plant solution. The user configures the physical host PCs which are used for performing the virtual machines containing the simulators. The user selects the objects that should be simulated and based on the engineering data that the engineering PC provides. A framework application is provided to configure the required simulators, the required network interface, and the required IP addresses as well as the load balancing of the simulation tools, the required number of virtual machines, finally performing the simulators, and the distribution of virtual machines to the physical PCs.

Accordingly, it is an object of the present invention to provide a system and method for automated commissioning of an industrial automation system which take into account the aspect of automation system servers and with which the above described drawbacks of known test environments for DCS are overcome.

The object is achieved by a remote data processing system and a method according to the independent claims.

As already described in the introduction, the industrial automation system to be commissioned the industrial automation system comprises a DCS which contains as DCS elements at least two industrial control devices, each of them being arranged to control operation of a respective part of an industrial plant during a production process, and at least one data communication means arranged to connect each of the at least two industrial control devices with the respective part of the industrial plant. The industrial automation system further comprises at least one automation system server being arranged as a physical computer appliance or as a virtual software appliance, each of the at least one automation system servers being dedicated to a specific operational aspect of the DCS.

The specific operational aspects of the DCS to the automation system servers may be dedicated to, are explained in the introduction and may comprise amongst others the aspects of providing data storage functionality, enabling or facilitating data communication or supporting the DCS in the execution of resource-intensive applications.

When the automation system servers are established as virtual software appliances, they are installed in a cloud environment, preferably a private cloud, where they are running on virtual machines.

According to the invention, the remote data processing system is installed outside of the industrial plant and comprises for each possible type of the at least one automation system servers a corresponding virtual appliance template which is based on a virtual machine on which the virtualized hardware, operating system and server software relating to the specific operational aspect of the respective automation system server type is preinstalled. The term "server software" is used for software applications that are developed and intended to be used for the specific operational aspect of the respective automation system server type. The type of the at least one automation system server may be one of a connectivity server, a database server or an application server.

For example, on a database server, a database system and a corresponding application software is installed, where the application software is then used to adapt the database system to the database usage needs of a particular DCS. Accordingly, the un-adapted database system and application software are preinstalled as "server software" on the virtual appliance template assigned to the automation system server type "data base server".

The remote data processing system is arranged to
- retrieve the number and types of the automation system servers of the industrial automation system, where this information can be provided via a human machine interface of via a data file,
- instantiate from the virtual appliance templates or dispose virtual server appliances so that they correspond in number and types to the retrieved number and types,
- establish a data connection between an engineering client and the virtual server appliances,
- forward input and output information between a remotely connected HMI, the engineering client and the virtual server appliances for creating in at least one of the virtual server appliances server specific automation software and/or automation data,
- convert each of the virtual server appliances into a corresponding physical computer image or into a virtual machine format used by the virtual software appliances of the automation system servers,
- download each converted virtual server appliance to a corresponding one of the automation system servers, and
- download at least a part of the server specific automation software and/or automation data to a remote data storage unit.

The term "server specific automation software" relates to any kind of code to be executed either on the automation server themselves or to be executed on a control or I/O device of the DCS, as well as to any configuration data, such as IP addresses or topology information, relating to the data communication of the DCS with the automation servers and/or with the production process of the industrial plant. Accordingly, the "server specific automation software" is the software developed during the above described engineering of the industrial automation system.

The downloading of the server specific automation software to a remote data storage unit refers to downloading this software either directly to the respective target DCS elements on site or to the engineering client or another intermediate computer or storage device first, from where it is to be transferred to the DCS elements at a later point in time.

The corresponding method for automated commissioning of an industrial automation system comprises all the steps executed by the remote data processing system.

The concept here is to move the engineering of an industrial automation system and the deployment of the engineering results from a locally installed IT infrastructure to one or several remote computer devices installed externally, such as in a private or in a public cloud environment. While the automation system servers are completely moved to the cloud, the engineering client computer may still be located on-site, but it is preferably running on a virtual machine in the remote data processing system as well.

Accordingly, no in-house IT hardware is required anymore to establish the engineering environment, so that the effort to maintain and adapt the hardware w.r.t. the changing needs of the engineering is avoided. The remote engineering environment is set up and configured automatically after the number and types of the automation system servers needed in the industrial automation system have been defined. As the hardware of the automation system servers is no longer needed during engineering, it can be shipped directly to the industrial plant.

During common engineering projects, the server software of the automation system servers is installed on each respective hardware node separately. That means that the server hardware has to be ordered and after it has arrived, a manual process of installing the server software begins for each node.

This is overcome with the proposed solution. The virtual server appliances are provided with a certain predefined structure. Within the cloud environment, each server type has a virtual appliance template. The virtual appliance template consists of a preconfigured virtual machine with the required virtual hardware and the server software of the automation system server. Additionally, the required operating system is preinstalled. Thus, if a new engineering project is started, the engineers pick the required types of servers from a library of virtual appliance templates. The virtual server appliances are then instantiated by duplicating the virtual appliance templates in the cloud. If more than one virtual server appliance is requested per server type, the required number of virtual appliances will be instantiated by further duplication. After the instantiation, the virtual server appliances can be used immediately without needing to install any further software.

Since the cloud is scalable and adapts automatically to new requirements regarding virtual resources, the engineers do not have to care anymore about the hardware and required performance of the engineering environment. As soon as the required server instances and engineering client instances are selected, the engineering can be started like it would be on physical computers, but with the difference that the engineering clients are located in the cloud and not on a physical PC anymore. The entire engineering IT hardware is virtualized.

When the engineering is finished, the engineering results are downloaded to the hardware of the industrial automation system on site. The downloading of the control code and configuration data to the DCS is done with the normal functionality as would be used for downloading from a real PC. In doing so, the real hardware is connected to the local area network (LAN) of the cloud, called virtual LAN. The virtual LAN that is used inside the cloud is bridged to a physical LAN, via the Internet for example, and the DCS components are attached to this network.

But not only is the DCS software deployed automatically, the real automation system servers are commissioned automatically, too, by converting and downloading their corresponding virtual appliances. There are two possible solutions to achieve this:
1. When the virtual appliances behave like a normal computer, i.e. both, the operating system and the server software of the virtual appliances have the same behavior as if they would be executed on a real PC, each virtual appliance is directly converted into a physical computer or PC image and restored on a normal computer. The conversion must be done because the virtual hardware differs, in terms of capabilities, from the real hardware. Therefore, a "downloader" is required that grabs the virtual appliance, adds required hardware drivers and converts configuration data from the virtual to the real format and afterwards moves the resulting software to the physical PC.
2. If the automation system servers on site are running in a private cloud environment, the conversion is easier, as the virtual appliances only need to be converted from the cloud format of the remote data processing system into the private cloud format used by the industrial plant. This conversion mainly involves the transformation from one virtual machine format into the other. If standardized cloud environments are used, existing conversion tools, e.g. VMWare Converter, may be applied. After the conversion, the transformed virtual appliance is moved to the private cloud server.

After the virtual appliances have been converted and moved to the site and after the application software of the industrial automation system has been downloaded, the software interfaces between the automation system servers and the DCS components are already working. Accordingly, there is only one final step to be made manually, the fieldbus cabling. As a result, only the physical setup of the automation system hardware and its cabling need to be performed, while the rest of the commissioning in the form of the installation of the server operating system and server software of the automation system servers as well as the deployment of the engineered application software is performed automatically.

In addition to the above described automation system software development and deployment, the proposed remote data processing system may as well be used during integration tests. To this end, it is suggested to arrange the remote data processing system so that it comprises for each possible type of the DCS elements a corresponding virtual machine template which emulates the respective DCS element type, wherein the remote data processing server is further arranged to
- retrieve engineering data of the industrial automation system from the engineering client, where the engineering data comprise at least the number, the types and communication configuration information of the DCS elements,
- instantiate from the relating virtual machine templates or dispose virtual DCS elements so that they correspond in number and types to the engineering data,
- establish communication connections between the virtual server appliances and the virtual DCS elements based on the communication configuration information of the engineering data,
- download parts of the server specific automation software and/or automation data which are required for operation of the DCS elements from the virtual server appliances to the respective virtual DCS elements,
- execute simulation commands by letting the virtual DCS elements and virtual server appliances run accordingly to create simulation results, and
- download the parts of the server specific automation software and/or automation data which are required for operation of the DCS elements from the virtual server appliances to the respective DCS elements.

The emulation of the DCS element types can be implemented as emulator of the physical hardware components running directly on a virtual machine, or as virtualized DCS element implemented in an operating system which itself is executed on a virtual machine.

The execution of simulation commands may include receiving or retrieving of simulation input signals provided for example via the engineering client or from a data file and the starting and stopping of the simulation.

The simulation results may be used by the remote data processing system to automatically update the server specific automation software and/or automation data according to the simulation results.

Accordingly, the integration tests of the industrial automation system are moved from a physical test environment into the cloud, as well. Since the hardware of the DCS needs to be replaced by software, the above mentioned emulation techniques are applied. As a result, not only the automation system servers, but the whole industrial automation system is made available in the virtual environment of the cloud. The emulated DCS elements are automatically connected to the virtual server appliances based on engineering data retrieved from the engineering client, where all these virtual devices are preferably located in the same cloud. The engineering results, namely the control code and configuration data, can be downloaded from the engineering client directly into the emulated DCS elements.

Since the engineering client or clients and automation system servers are located in the same virtual environment as the simulated DCS, it is possible to directly feed the engineering results into the simulation environment so that the simulation is always kept up-to-date. No shipping of hardware from an engineering site to a test site is necessary. And since the virtual hardware resources are scalable, the test and simulation environment can be easily created and amended "on-the-fly".

By using this approach, it is possible to continuously update the virtual image of the industrial automation system, whether it is located in a private or a public cloud, since the engineering data and the virtual environment can always be kept synchronized. The remote data processing system may in particular be arranged to retrieve an update of the number and types of the automation system servers and/or of the engineering data whenever the update is available or at pre-defined time intervals.

The fact that a virtual image of the industrial automation system can be kept available at all times is of particular advantage during brown-field engineering, when an existing industrial automation system is to be updated, expanded or amended. Any new parts of the automation system are tested in the virtual environment. When everything is tested against the virtual system, the new software and control applications can be downloaded to the new hardware parts already brought to the production environment. By doing this, the new parts can be fully prepared and are fully tested before they are actually integrated into the existing automation system in real life. Since no on-site engineering and testing is required and since most of the commissioning is done automatically without needing the hardware of the existing automation system, the downtime of the production process during brown-filed engineering is reduced considerably.

It is further suggested that the remote data processing system may comprise a simulation virtual machine containing a runtime environment of a simulation model of the production process of the industrial plant. This allows for the testing of the interaction between automation system servers, DCS and production process of the industrial plant, which is required during FAT.

In order to not only keep the virtual representation of the automation system up-to-date but also the virtual representation of the production process, the remote data processing system may be arranged to retrieve a copy of an update of the simulation model, whenever the update is available or at pre-defined time intervals, and to load the update into the simulation virtual machine. The simulation model may for example be developed and kept in the engineering client, so that the remote data processing system may retrieve the update of the simulation model either via a remote data connection or via an internal link from a physical or a virtual engineering client, respectively.

The invention and its embodiments will become more apparent from the examples described below in connection with the appended drawings which illustrate:
- Fig. 1: realization of a test environment based on emulation or virtualization of DCS elements, as known from the art,
- Fig. 2: realization of a test environment based on a single virtual machine template, as known from the art,
- Fig. 3: virtual appliance templates for automation system server types and an engineering client,
- Figs. 4, 5: virtual machine templates for DCS elements
- Fig. 6: a communication infrastructure in an industrial plant,
- Fig. 7: an example of a system for commissioning of an automation system,
- Fig. 8: the system of Fig. 7 expanded for testing the automation system,
- Fig. 9: another representation of the system of Fig. 8.

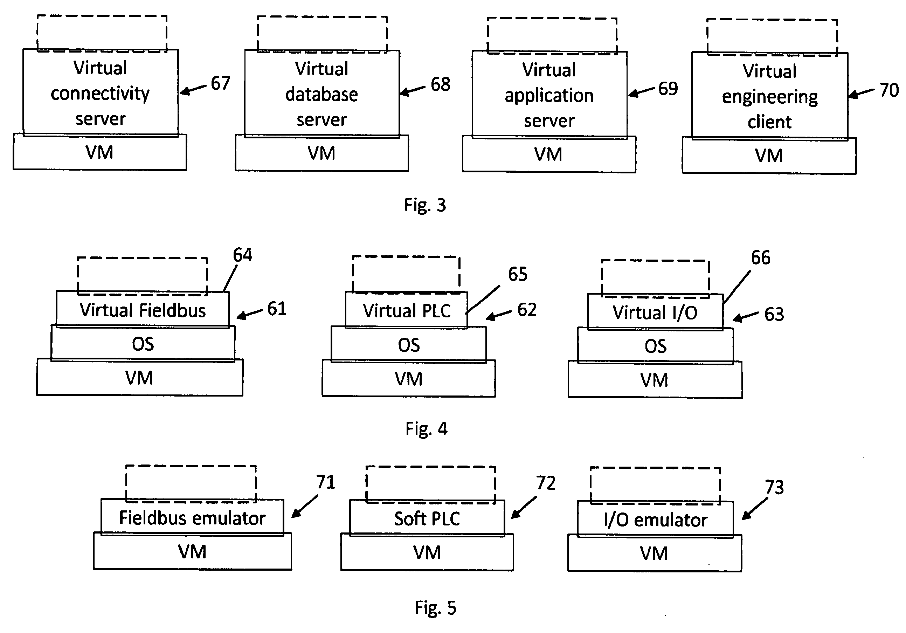

In Fig. 3, three virtual appliance templates 67 to 69 for different automation server types are shown, namely for a connectivity server, for a database server and for an application server. In addition, a virtual appliance template 70 for an engineering client is depicted. Each of the virtual appliance templates 67 to 70 consists of a preconfigured virtual machine VM with additionally required virtualized hardware of the particular server type, a preinstalled operating system and the respective server software.

Fig. 4 shows virtual machine templates 61-63 for three different DCS element types are shown, each of them based again on a virtual machine VM. An operating system is running on each virtual machine on top of which a virtual fieldbus 64, a virtual PLC 65 and a virtual I/O device is implemented, respectively.

Another possible implementation of virtual machine templates 71-73 for the DCS element types of Fig. 4 is depicted in Fig. 5, where in each case an emulator of the physical hardware of the respective DCS element is running on a virtual machine VM.

Accordingly, in the present solution, for each element or server type of the industrial automation system, a separate template is provided based on its own individual virtual machine, where the original application software of the automation system servers or the original control code or firmware of the DCS elements may then be executed on an instance of these templates, which is illustrated by the dotted rectangles.

As a result of the individual virtual templates, the emulators are no longer combined in a single template as known from the art and as shown in Fig. 2. In this way, it becomes possible to automatically reflect any changes made to the automation system in the virtual engineering and test environment, by being able to automatically generate and update a virtual representation of the automation system without requiring any direct user interaction to initiate the updating.

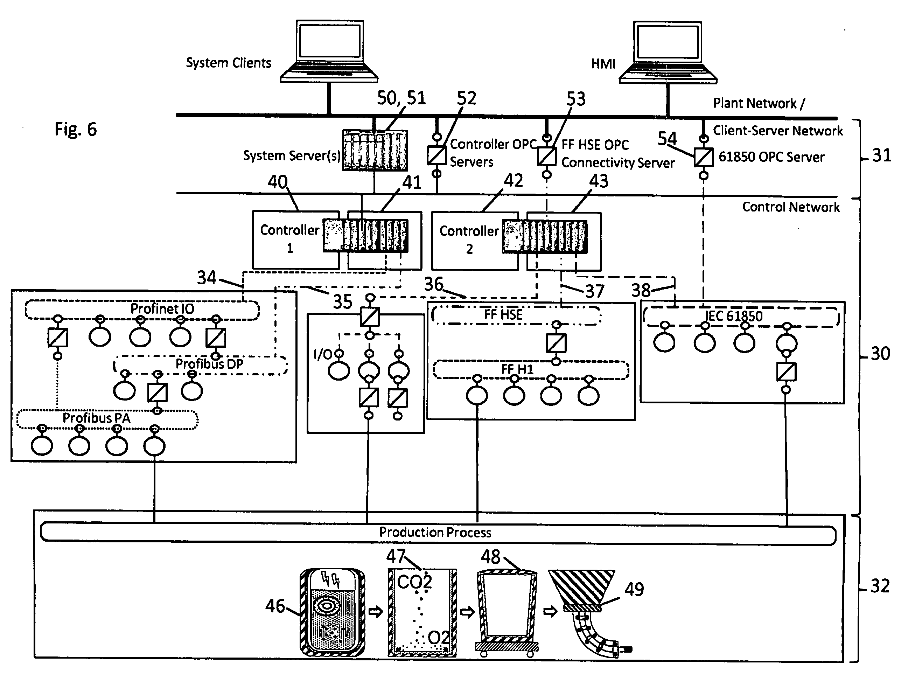

Fig. 6 shows an example of a communication infrastructure in an industrial plant. Industrial plants where an automation system is used may belong to all kinds of industry sectors, such as pharmaceutical, chemical, mineral, metals, oil and gas or the power generation industry. The example shown here is a melt shop belonging to the steel industry. Examples for the oil and gas industry may for example include installations used for refinery, ethylene, gasification and gas treatment, or gas liquefaction.

The melt shop comprises for illustrative purposes at least one electric arc furnace 47 for melting steel scrap, at least one argon oxygen decarburization unit 48 for processing the molten steel by oxygen (02) blowing, at least one ladle furnace 49 where for alloying purposes temperature and chemistry adjustments are made and at least one continuous caster 50 for casting slabs, which are then cut to length and transferred to downstream storage and/or rolling mills. Accordingly, the input to the production process 32 performed by the melt shop is steel crap, and the output are steel slabs.

The production process 32 for producing the steel slabs is controlled via an industrial automation system which comprises automation system servers 31 and a DCS 30. The automation servers 31 include an application server 50, a database server 51 and various connectivity servers 52-54. The DCS 30 comprises at least two industrial control devices 40, 42, each of them being arranged to control operation of a respective actuating part of the industrial plant during the production process 32, based on a current operational state of the respective actuating part. The DCS 30 further comprises at least one data communication means, which are here illustrated as fieldbuses based on different protocols, such as Profinet 34, Profubs 35, Foundation Fieldbus 37 and IEC 61850 process bus 38, as well as I/O system 35 and communication interfaces 41, 43 of the control devices 40, 42. All these data communication means are used for communication between the control devices 40, 42 and actuating parts and sensors involved in the production process 32.

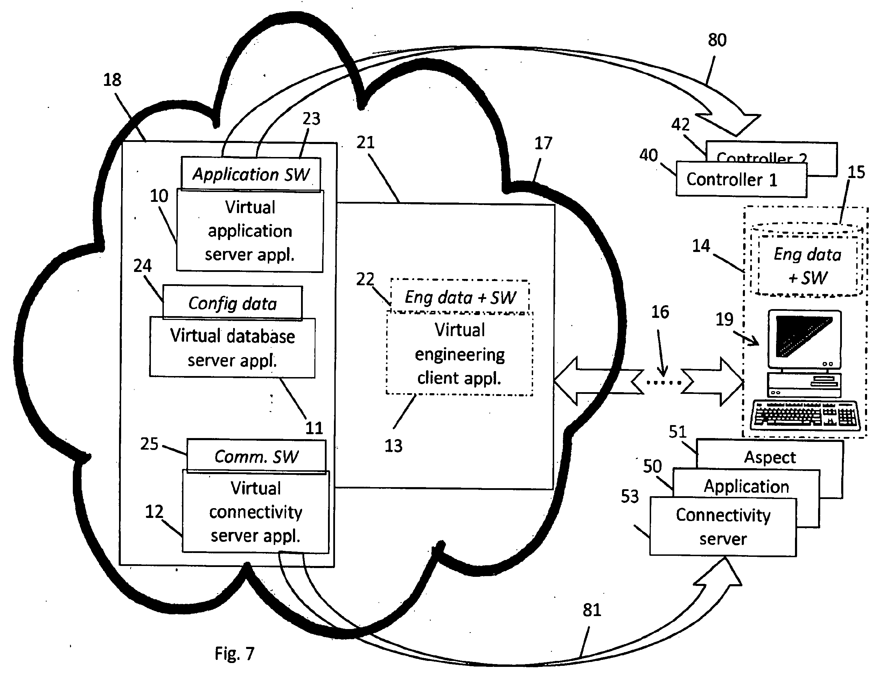

In Figs. 7 to 10, an example is shown for a remote data processing system 17 installed outside of the industrial plant of Fig. 6 which comprises two data processing servers 18 and 21.

In the realization of Fig. 7, the remote data processing system 17 has instantiated from the respective virtual appliance templates 67 to 70 a virtual application server appliance 10, a virtual aspect server appliance 11, and a virtual connectivity server appliance 12. An engineering client may either be provided locally (client 14 including data storage 15) or may be instantiated by the remote data processing system 17 from template 70, thereby creating a virtual engineering client appliance 13. The remote data processing system 17 has established a data connection between the internal or external engineering client, 13 or 14, and the virtual server appliances 10-12. In addition, a data communication link 16 exists between a human machine interface (HMI) 19 and the remote data processing system 17, where in this example the HMI 19 may belong to the external engineering client 14.

The remote data processing system 17 forwards input and output information between the HMI 19, the engineering client 13 or 14 and the virtual server appliances 10-12 so that server specific automation software 23, 25 and automation data 24, 25 is generated in order to engineer the automation system 30, 31 of the industrial plant of Fig. 6. The server specific automation software is in this example application software 23 in the form of control code, configuration data 24 such as number and types of the DCS elements and communication software and communication configuration data 25 needed to setup and run the data communication means 34-38 of the DCS 30.

After the engineering is complete, the remote data processing system 17 converts each of the virtual server appliances 10-12 into a corresponding physical computer image and downloads each computer image to a corresponding one of the automation system servers 50-54 of Fig. 6, where arrow 81 here indicates the conversion and download process for the connectivity server appliance 53. Further, the remote data processing system 17 downloads at least a part of the server specific automation software and/or automation data 23-25 to the respective elements of DCS 30, such as downloading control code of application software 23 to control device 42 (arrow 80).

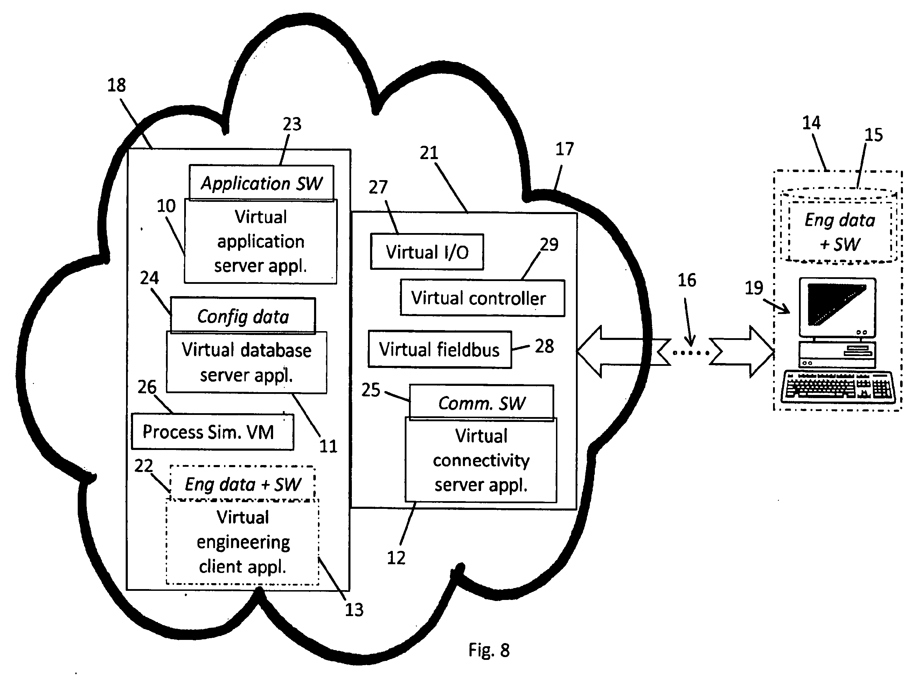

In Fig. 8, the remote data processing system 17 has instantiated from the virtual machine template 61-63 or 71-73 a virtual I/O communication interface 27, a virtual controller 29 and a virtual fieldbus 28, corresponding to respective elements of DCS 30. Further, system 17 comprises a simulation virtual machine 26 containing a runtime environment of a simulation model of the production process 32.

In order to provide a test environment for integration tests and FAT, the remote data processing system 17 establishes a communication connections between the virtual server appliances 10-12 and the virtual DCS elements 27-29 based on communication configuration information contained in engineering data 15 or 22 which the system 17 has retrieved from the engineering client 14 or 13, respectively. Then, the remote data processing system 17 downloads from the virtual server appliances 10-12 those parts of the server specific automation software and/or automation data 23-25 which are required for operation of the DCS 30 to the respective virtual DCS elements 27-29.

System 17 executes simulation commands received from HMI 19 by letting the virtual DCS elements 27-29 and the virtual server appliances 10-12 run accordingly so that simulation results are created. According to the simulation results, automatic amendments of the server specific automation software and/or automation data 23-25 may be initiated by system 17 or may be performed manually via HMI 19 and are reflected by system 17 automatically both in the virtual server appliances 10-12 and the virtual DCS elements 27-29.

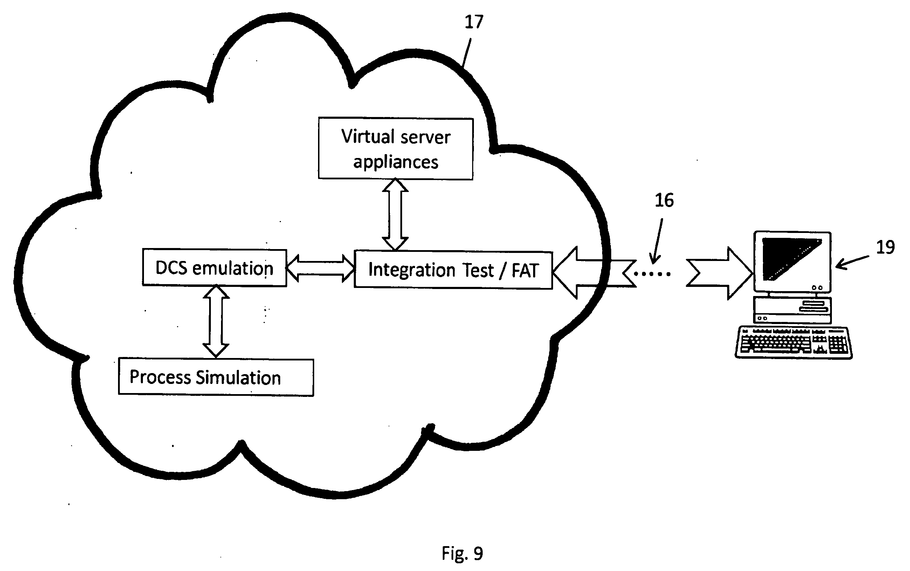

The test environment of Fig. 8 is shown in another representation in Fig. 9.

After simulation and thereby the testing is completed successfully, the remote data processing system 17 downloads from the virtual server appliances 10-12 the parts of the server specific automation software and/or automation data 23-25 which are required for operation of the DCS elements to the respective DCS elements 40, 42, 34-38, in the same way as indicated in Fig. 8 by arrow 80.

After engineering and commissioning of automation system servers 31 and DCS 30 is fully completed, the remote data processing system may put any of the virtual server appliances, the virtual DCS elements or the simulation virtual machine in a suspended mode. In this way, the resources used for the particular virtual engineering and test environment are made available for other applications, such as further engineering projects. The test environment is then still available but in an offline mode.

In addition, the remote data processing system may automatically perform a deconstruction of the engineering and test environment and store the resulting virtual appliances and elements and the simulation virtual machine in at least one remote data storage unit inside the system 17 for backup reasons. This may be done at a corresponding user request. Even further, the virtual appliances and elements and the simulation virtual machine may be extracted from the remote data processing system 17 and stored outside of the cloud, for example in the engineering data storage unit 15, from where they may then be resurrected at a later point in time for further engineering and testing.

Apart from that, the resulting virtual appliances and elements and the simulation virtual machine in the remote data processing system may also be used during monitoring and/or fault diagnosis of the production process 32. In this way, the virtual duplicates of the automation system servers and the DCS and the simulation model of the production process may be reused during the actual operation of the industrial plant to serve as a base for a digital observer model of the time-dependent operational behavior of the production process and the DCS, where the digital observer model is used to generate those operational states of the industrial plant which are not available, since they are for example not measured by sensors or currently not accessible.

## Claims

1. Remote data processing system (1, 2) for automated commissioning of an industrial automation system, the industrial automation system comprising:
• a distributed control system DCS (30) with as its elements at least two industrial control devices (40, 42), each of them being arranged to control operation of a respective part of an industrial plant during a production process (32), and at least one data communication means (34-38) arranged to connect each of the at least two industrial control devices (40, 42) with the respective part of the industrial plant, and
• automation system servers (50-54) being arranged as a physical computer appliance or as a virtual software appliance, each of the automation system servers (50-54) being dedicated to a specific operational aspect of the DCS (30);
*wherein* the remote data processing system (1, 2)
• is installed outside of the industrial plant,
• comprises for each possible type of the automation system servers (50-54) a corresponding virtual appliance template (67-69) which is based on a virtual machine on which the virtualized hardware, operating system and server software relating to the specific operational aspect of the respective automation system server type is preinstalled, and
• is arranged to
o retrieve the number and types of the automation system servers (50-54) of the industrial automation system,
o instantiate from the virtual appliance templates (67-69) or dispose virtual server appliances (10-12) so that they correspond in number and types to the retrieved number and types,
o establish a data connection between an engineering client (14; 13) and the virtual server appliances (10-12),
o forward input and output information between a remotely connected human machine interface HMI (19), the engineering client (14; 13) and the virtual server appliances (10-12) for creating in the virtual server appliances (10-12) server specific automation software and/or automation data (23-25),
o convert each of the virtual server appliances (10-12) into a corresponding physical computer image or into a virtual machine format used by the virtual software appliances of the automation system servers (50-54),
o download each converted virtual server appliance to a corresponding one of the automation system servers (50-54), and
o download at least a part of the server specific automation software and/or automation data (23-25) to a remote data storage unit (15).
***characterized in that***
*the system is further comprising for each possible type of the DCS elements (40, 42, 34-38) a corresponding virtual machine template which emulates (61-63, 71-73) the respective DCS element type, wherein the remote data processing server is further arranged to*
• *retrieve engineering data (15; 22) of the industrial automation system from the engineering client (14; 93), where the engineering data comprise at least the number, the types and communication configuration information of the DCS elements (40, 42, 34-38),*
• *instantiate from the relating virtual machine templates (71-73; 61-63) or dispose virtual DCS elements (27-29) so that they correspond in number and types to the engineering data (15; 22),*
• *establish communication connections between the virtual server appliances (10-12) and the virtual DCS elements (27-29) based on the communication configuration information of the engineering data (15; 22),*
• *download parts of the server specific automation software and*/*or automation data (23-25) which are required for operation of the DCS elements from the virtual server appliances (10-12) to the respective virtual DCS elements (27-29),*
• *execute simulation commands by letting the virtual DCS elements and virtual server appliances run accordingly to create simulation results, and*
• *download the parts of the server specific automation software and*/*or automation data (23-25) which are required for operation of the DCS elements from the virtual server appliances (10-12) to the respective DCS elements (40, 42, 34-38).*

2. System according to claim 1, wherein the engineering client is running on a virtual machine in the remote data processing system (1, 2).

3. System according to claim 2, which is arranged to update the server specific automation software and/or automation data (23-25) according to the simulation results.

4. System according to any of the previous claims, wherein the system is arranged to retrieve an update of the number and types of the automation system servers (50-54) and/or of the engineering data whenever the update is available or at pre-defined time intervals.

5. System according to any of the previous claims, wherein the at least one remote data processing system (1, 2) further comprises a simulation virtual machine (26) containing a runtime environment of a simulation model of the production process (32) of the industrial plant.

6. System according to any of the previous claims, wherein the system is arranged to retrieve a copy of an update of the simulation model, whenever the update is available or at pre-defined time intervals, and to load the update into the simulation virtual machine (7).

7. System according to any of the previous claims, wherein the type of the at least one automation system server is one of a connectivity server (52-54), a database server (51) or an application server (50).

8. System according to any of the previous claims, wherein the DCS further comprises at least one communication interface (41, 43) of one of the at least two industrial control devices (40, 42).

9. System according to any of the previous claims, wherein the system is arranged to put any of the virtual server appliances, the virtual DCS elements or the simulation virtual machine in a suspended mode and/or to store them in data storage unit belonging to the remote data processing system.

10. Method for automated commissioning of an industrial automation system, the industrial automation system comprising:
• a distributed control system DCS (30) with as its elements at least two industrial control devices (40, 42), each of them being arranged to control operation of a respective part of an industrial plant during a production process (32), and at least one data communication means (34-38) arranged to connect each of the at least two industrial control devices (40,42) with the respective part of the industrial plant, and
• automation system servers (50-54) being arranged as a physical computer appliance or as a virtual software appliance, each of the automation system servers (50-54) being dedicated to a specific operational aspect of the DCS (30);
*whereby* performing in a remote data processing system (1, 2) which is installed outside of the industrial plant the following steps:
• providing for each possible type of the automation system servers (50-54) a corresponding virtual appliance template (67-69) which is based on a virtual machine on which the virtualized hardware, operating system and server software relating to the specific operational aspect of the respective automation system server type is preinstalled, and
• retrieving the number and types of the automation system servers (50-54) of the industrial automation system,
• instantiating from the virtual appliance templates (67-69) or disposing virtual server appliances (10-12) so that they correspond in number and types to the retrieved number and types,
• establishing a data connection between an engineering client (14; 13) and the virtual server appliances (10-12),
• forwarding input and output information between a remotely connected HMI (19), the engineering client (14; 13) and the virtual server appliances (10-12) for creating in the virtual server appliances (10-12) server specific automation software and/or automation data (23-25),
• converting each of the virtual server appliances (10-12) into a corresponding physical computer image or into a virtual machine format used by the virtual software appliances of the automation system servers (50-54),
• downloading each converted virtual server appliance to a corresponding one of the automation system servers (50-54),
• downloading the server specific automation software and/or automation data (23-25) to a remote data storage unit (15),
**characterized by** the following steps
• *providing for each possible type of the DCS elements (40, 42, 34*-*38*) *a corresponding virtual machine template which emulates (61-63, 71-73) the respective DCS element type,*
• *retrieving engineering data (15; 22) of the industrial automation system from the engineering client (14; 13), where the engineering data comprise at least the number, the types and communication configuration information of the DCS elements (40, 42, 34-38),*
• *instantiating from the relating virtual machine templates (71-73; 61-63) or disposing virtual DCS elements (27-29) so that they correspond in number and types to the engineering data (15; 22),*
• *establishing communication connections between the virtual server appliances (10-12) and the virtual DCS elements (27-29) based on the communication configuration information of the engineering data (15; 22),*
• *downloading parts of the server specific automation software and*/*or automation data (23-25) which are required for operation of the DCS elements from the virtual server appliances (10-12) to the respective virtual DCS elements (27-29),*
• *executing simulation commands by letting the virtual DCS elements and virtual server appliances run accordingly to create simulation results, and*
• *download the parts of the server specific automation software and*/*or automation data (23-25) which are required for operation of the DCS elements from the virtual server appliances (10-12) to the respective DCS elements (40, 42, 34-38).*

11. Method according to claim *10,* wherein the engineering client is provided on a virtual machine in the remote data processing system (1, 2).

12. Method according to any of the previous claims *10 or 11*, wherein the virtual server appliances (10-12) and/or the virtual DCS elements (27-29) are kept in a suspended mode after instantiation.

## Patentansprüche

1. Entferntes Datenverarbeitungssystem (1, 2) zur automatischen Inbetriebnahme eines industriellen Automatisierungssystems, wobei das industrielle Automatisierungssystem Folgendes umfasst:
• ein System mit verteilter Steuerung DCS (30), unter dessen Elementen sich mindestens zwei industrielle Steuereinrichtungen (40, 42), die je zur Steuerung des Betriebs eines jeweiligen Teils einer Industrieanlage während eines Produktionsprozesses (32) eingerichtet sind, und mindestens ein Datenkommunikationsmittel (34-38), das zum Verbinden jeder der mindestens zwei industriellen Steuereinrichtungen (40, 42) mit dem jeweiligen Teil der Industrieanlage eingerichtet ist, finden, und
• Automatisierungssystemserver (50-54), die als physische Computer-Appliance oder als virtuelle Software-Appliance eingerichtet sind, wobei jeder der Automatisierungssystemserver (50-54) für einen spezifischen betrieblichen Aspekt des DCS (30) vorgesehen ist;
*wobei* das entfernte Datenverarbeitungssystem (1, 2)
• außerhalb der Industrieanlage installiert ist,
• für jeden möglichen Typ der Automatisierungssystemserver (50-54) eine entsprechende Vorlage (67-69) für eine virtuelle Appliance umfasst, die auf einer virtuellen Maschine basiert, in der die virtualisierte Hardware, das virtualisierte Betriebssystem und die virtualisierte Serversoftware hinsichtlich des spezifischen betrieblichen Aspektes des jeweiligen Automatisierungssystemservertyps vorinstalliert sind, und
• eingerichtet ist zum
∘ Abrufen der Zahl und der Typen der Automatisierungssystemserver (50-54) des industriellen Automatisierungssystems,
∘ Aufrufen aus den Vorlagen (67-69) für eine virtuelle Appliance oder Anordnen virtueller Server-Appliances (10-12), sodass sie hinsichtlich der Zahl und der Typen der abgerufenen Zahl und den abgerufenen Typen entsprechen;
∘ Herstellen einer Datenverbindung zwischen einem Maschinenbau-Client (14; 13) und den virtuellen Server-Appliances (10-12),
∘ Weiterleiten von Eingabe- und Ausgabeinformationen zwischen einer entfernt verbundenen Mensch-Maschine-Schnittstelle HMI (19), dem Maschinenbau-Client (14; 13) und den virtuellen Server-Appliances (10-12) zum Erzeugen (10-12) serverspezifischer Automatisierungssoftware und/oder Automatisierungsdaten (23-25) in den virtuellen Server-Appliances (10-12),
o Umwandeln jeder der virtuellen Server-Appliances (10-12) in ein entsprechendes physisches Computerbild oder in ein Format einer virtuellen Maschine, das von den virtuellen Software-Appliances der Automatisierungssystemserver (50-54) verwendet wird,
o Herunterladen jeder umgewandelten virtuellen Server-Appliance in einen entsprechenden der Automatisierungssystemserver (50-54) und
∘ Herunterladen mindestens eines Teils der serverspezifischen Automatisierungssoftware und/oder Automatisierungsdaten (23-25) in eine entfernte Datenspeichereinheit (15),
***dadurch gekennzeichnet, dass***
*das System ferner für jeden möglichen Typ der DCS-Elemente (40, 42, 34-38) eine entsprechende Vorlage für eine virtuelle Maschine umfasst, die den jeweiligen DCS-Elementtyp emuliert (61-63, 71-73), wobei der entfernte Datenverarbeitungsserver ferner eingerichtet ist zum*
• *Abrufen von Maschinenbaudaten (15; 22) des industriellen Automatisierungssystems aus dem Maschinenbau-Client (14; 13), wobei die Maschinenbaudaten mindestens die Zahl, die Typen und Kommunikationskonfigurationsinformationen der DCS-Elemente (40, 42, 34-38) umfassen,*
• *Aufrufen aus den betreffenden Vorlagen (71-73; 61-63) für eine virtuelle Maschine oder Anordnen virtueller DCS-Elemente (27-29), sodass sie hinsichtlich der Zahl und der Typen den Maschinenbaudaten (15; 22) entsprechen,*
• *Herstellen von Kommunikationsverbindungen zwischen den virtuellen Server-Appliances (10-12) und den virtuellen DCS-Elementen (27-29) basierend auf den Kommunikationskonfigurationsinformationen der Maschinenbaudaten (15; 22),*
• *Herunterladen von Teilen der serverspezifischen Automatisierungssoftware und*/*oder Automatisierungsdaten (23-25), die für den Betrieb der DCS-Elemente erforderlich sind, aus den virtuellen Server-Appliances (10-12) in die jeweiligen virtuellen DCS-Elemente (27-29),*
• *Ausführen von Simulationsbefehlen, indem die virtuellen DCS-Elemente und die virtuellen Server-Appliances entsprechend laufen gelassen werden, um Simulationsergebnisse zu erzeugen, und*
• *Herunterladen der Teile der serverspezifischen Automatisierungssoftware und*/*oder Automatisierungsdaten (23-25), die für den Betrieb der DCS-Elemente erforderlich sind, aus den virtuellen Server-A+ppliances (10-12) in die jeweiligen DCS-Elemente (40, 42, 34-38).*

2. System nach Anspruch 1, wobei der Maschinenbau-Client in einer virtuellen Maschine im entfernten Datenverarbeitungssystem (1, 2) läuft.

3. System nach Anspruch 2, das zum Aktualisieren der serverspezifischen Automatisierungssoftware und/oder Automatisierungsdaten (23-25) gemäß den Simulationsergebnissen eingerichtet ist.

4. System nach einem der vorherigen Ansprüche, wobei das System zum Abrufen einer Aktualisierung der Zahl und der Typen der Automatisierungssystemserver (50-54) und/oder der Maschinenbaudaten immer dann, wenn die Aktualisierung verfügbar ist, oder in zuvor definierten Zeitintervallen eingerichtet ist.

5. System nach einem der vorherigen Ansprüche, wobei das mindestens eine entfernte Datenverarbeitungssystem (1, 2) ferner eine virtuelle Simulationsmaschine (26) umfasst, die eine Laufzeitumgebung eines Simulationsmodells des Produktionsprozesses (32) der Industrieanlage enthält.

6. System nach einem der vorherigen Ansprüche, wobei das System zum Abrufen einer Kopie einer Aktualisierung des Simulationsmodells immer dann, wenn die Aktualisierung verfügbar ist, oder in zuvor definierten Zeitintervallen und zum Laden der Aktualisierung in die virtuelle Simulationsmaschine (7) eingerichtet ist.

7. System nach einem der vorherigen Ansprüche, wobei der Typ des mindestens einen Automatisierungssystemservers ein Konnektivitätsserver (52-54) und/oder ein Datenbankserver (51) und/oder ein Anwendungsserver (50) ist.

8. System nach einem der vorherigen Ansprüche, wobei das DCS ferner mindestens eine Kommunikationsschnittstelle (41, 43) einer der mindestens zwei industriellen Steuereinrichtungen (40, 42) umfasst.

9. System nach einem der vorherigen Ansprüche, wobei das System zum Überführen beliebiger der virtuellen Server-Appliances, der virtuellen DCS-Elemente oder der virtuellen Simulationsmaschine in einen angehaltenen Modus und/oder zu ihrer Speicherung in einer zum entfernten Datenverarbeitungssystem gehörenden Datenspeichereinheit eingerichtet ist.

10. Verfahren zur automatischen Inbetriebnahme eines industriellen Automatisierungssystems, wobei das industrielle Automatisierungssystem Folgendes umfasst:
• ein System mit verteilter Steuerung DCS (30), unter dessen Elementen sich mindestens zwei industrielle Steuereinrichtungen (40, 42), die je zur Steuerung des Betriebs eines jeweiligen Teils einer Industrieanlage während eines Produktionsprozesses (32) eingerichtet sind, und mindestens ein Datenkommunikationsmittel (34-38), das zum Verbinden jeder der mindestens zwei industriellen Steuereinrichtungen (40, 42) mit dem jeweiligen Teil der Industrieanlage eingerichtet ist, finden, und
• Automatisierungssystemserver (50-54), die als physische Computer-Appliance oder als virtuelle Software-Appliance eingerichtet sind, wobei jeder der Automatisierungssystemserver (50-54) für einen spezifischen betrieblichen Aspekt des DCS (30) vorgesehen ist;
*wodurch* in einem entfernten Datenverarbeitungssystem (1, 2), das außerhalb der Industrieanlage installiert ist, folgende Schritte durchgeführt werden:
• Bereitstellen einer entsprechenden Vorlage (67-69) für eine virtuelle Appliance, die auf einer virtuellen Maschine basiert, in der die virtualisierte Hardware, das virtualisierte Betriebssystem und die virtualisierte Serversoftware hinsichtlich des spezifischen betrieblichen Aspektes des jeweiligen Automatisierungssystemservertyps vorinstalliert sind, für jeden möglichen Typ der Automatisierungssystemserver (50-54) und
• Abrufen der Zahl und der Typen der Automatisierungssystemserver (50-54) des industriellen Automatisierungssystems,
• Aufrufen aus den Vorlagen (67-69) für eine virtuelle Appliance oder Anordnen virtueller Server-Appliances (10-12), sodass sie hinsichtlich der Zahl und der Typen der abgerufenen Zahl und den abgerufenen Typen entsprechen;
• Herstellen einer Datenverbindung zwischen einem Maschinenbau-Client (14; 13) und den virtuellen Server-Appliances (10-12),
• Weiterleiten von Eingabe- und Ausgabeinformationen zwischen einer entfernt verbundenen HMI (19), dem Maschinenbau-Client (14; 13) und den virtuellen Server-Appliances (10-12) zum Erzeugen serverspezifischer Automatisierungssoftware und/oder Automatisierungsdaten (23-25) in den virtuellen Server-Appliances (10-12),
• Umwandeln jeder der virtuellen Server-Appliances (10-12) in ein entsprechendes physisches Computerbild oder in ein Format einer virtuellen Maschine, das von den virtuellen Software-Appliances der Automatisierungssystemserver (50-54) verwendet wird,
• Herunterladen jeder umgewandelten virtuellen Server-Appliance in einen entsprechenden der Automatisierungssystemserver (50-54),
• Herunterladen der serverspezifischen Automatisierungssoftware und/oder Automatisierungsdaten (23-25) in eine entfernte Datenspeichereinheit (15), **gekennzeichnet durch** folgende Schritte:
• *Bereitstellen einer entsprechenden Vorlage für eine virtuelle Maschine, die den jeweiligen DCS-Elementtyp emuliert (61-63, 71-73), für jeden möglichen Typ der DCS-Elemente (40, 42, 34-38),*
• *Abrufen von Maschinenbaudaten (15; 22) des industriellen Automatisierungssystems aus dem Maschinenbau-Client (14; 13), wobei die Maschinenbaudaten mindestens die Zahl, die Typen und Kommunikationskonfigurationsinformationen der DCS-Elemente (40, 42, 34-38) umfassen,*
• *Aufrufen aus den betreffenden Vorlagen (71-73; 61-63) für eine virtuelle Maschine oder Anordnen virtueller DCS-Elemente (27-29), sodass sie hinsichtlich der Zahl und der Typen den Maschinenbaudaten (15; 22) entsprechen,*
• *Herstellen von Kommunikationsverbindungen zwischen den virtuellen Server-Appliances (10-12) und den virtuellen DCS-Elementen (27-29) basierend auf den Kommunikationskonfigurationsinformationen der Maschinenbaudaten (15; 22),*
• *Herunterladen von Teilen der serverspezifischen Automatisierungssoftware und*/*oder Automatisierungsdaten (23-25), die für den Betrieb der DCS-Elemente erforderlich sind, aus den virtuellen Server-Appliances (10-12) in die jeweiligen virtuellen DCS-Elemente (27-29),*
• *Ausführen von Simulationsbefehlen, indem die virtuellen DCS-Elemente und die virtuellen Server-Appliances entsprechend laufen gelassen werden, um Simulationsergebnisse zu erzeugen, und*/*oder*
• *Herunterladen der Teile der serverspezifischen Automatisierungssoftware und*/*oder Automatisierungsdaten (23-25), die für den Betrieb der DCS-Elemente erforderlich sind, aus den virtuellen Server-Appliances (10-12) in die jeweiligen DCS-Elemente (40, 42, 34-38).*

11. Verfahren nach Anspruch 10, wobei der Maschinenbau-Client in einer virtuellen Maschine im entfernten Datenverarbeitungssystem (1, 2) bereitgestellt wird.

12. Verfahren nach einem der vorherigen Ansprüche 10 oder 11, wobei die virtuellen Server-Appliances (10-12) und/oder die virtuellen DCS-Elemente (27-29) nach dem Aufruf in einem angehaltenen Modus gehalten werden.

## Revendications

1. Système de traitement de données à distance (1, 2) pour la mise en service automatisée d'un système d'automatisation industrielle, le système d'automatisation industrielle comprenant :
- un système de commande distribuée DCS (30) ayant comme éléments au moins deux dispositifs de commande industrielle (40, 42), chacun d'eux étant agencé pour commander le fonctionnement d'une partie respective d'une installation industrielle durant un processus de production (32), et au moins un moyen de transmission de données (34-38) agencé pour connecter chacun des au moins deux dispositifs de commande industrielle (40, 42) à la partie respective de l'installation industrielle, et
- des serveurs de système d'automatisation (50-54) agencés comme un dispositif informatique physique ou un dispositif logiciel virtuel, chacun des serveurs de système d'automatisation (50-54) étant dédié à un aspect opérationnel spécifique du système DCS (30) ;
dans lequel le système de traitement de données à distance (1, 2)
- est installé en dehors de l'installation industrielle,
- comprend pour chaque type possible des serveurs de système d'automatisation (50-54) un modèle de dispositif virtuel correspondant (67-69) basé sur une machine virtuelle sur laquelle le matériel virtualisé, le système d'exploitation et le logiciel de serveur relatif à l'aspect opérationnel spécifique du type de serveur de système d'automatisation respectif sont préinstallés, et
- est agencé pour
o recouvrer le nombre et les types des serveurs de système d'automatisation (50-54) du système d'automatisation industrielle,
instancier à partir des modèles de dispositifs virtuels (67-69) ou disposer les dispositifs de serveurs virtuels (10-12) de telle sorte qu'ils correspondent en nombre et en types aux nombre et types recouvrés,
o établir une connexion de données entre un client technique (14 ; 13) et les dispositifs de serveurs virtuels (10-12),
o acheminer des informations d'entrée et de sortie entre un interface homme/machine HMI connectée à distance (19), le client technique (14 ; 13) et les dispositifs de serveurs virtuels (10-12) pour créer dans les dispositifs de serveurs virtuels (10-12) un logiciel d'automatisation spécifique au serveur et/ou des données d'automatisation spécifiques au serveur (23-25),
o convertir chacun des dispositifs de serveurs virtuels (10-12) en une image informatique physique correspondante ou en un format de machine virtuelle utilisé par les dispositifs logiciels virtuels des serveurs de système d'automatisation (50-54),
o télécharger chaque dispositif de serveur virtuel converti dans un serveur correspondant des serveurs de système d'automatisation (50-54), et
o télécharger au moins une partie du logiciel d'automatisation spécifique au serveur et/ou des données d'automatisation spécifiques au serveur (23-25) dans une unité de mémorisation de données à distance (15) ;
**caractérisé en ce que**
le système comprend en outre pour chaque type possible des éléments DCS (40, 42, 34-38) un modèle de machine virtuelle correspondant qui émule (61-63, 71-73) le type d'élément DCS respectif, dans lequel le serveur de traitement de données à distance est agencé en outre pour
- recouvrer des données techniques (15 ; 22) du système d'automatisation industrielle à partir du client technique (14 ; 13), dans lequel les données techniques comportent au moins le nombre, les types et les informations de configuration de communication des éléments DCS (40, 42, 34-38),
- instancier à partir des modèles de machine virtuelle associés (71-73, 61-63) ou disposer des éléments DCS virtuels (27-29) de telle sorte qu'ils correspondent en nombre et en types aux données techniques (15 ; 22),
- établir des connexions de communication entre les dispositifs de serveurs virtuels (10-12) et les les éléments DCS virtuels (27-29) en fonction des informations de configuration de communication des données techniques (15 ; 22),
- télécharger des parties du logiciel d'automatisation spécifique au serveur et/ou des données d'automatisation spécifiques au serveur (23-25) nécessaires pour le fonctionnement des éléments DCS depuis les dispositifs de serveurs virtuels (10-12) dans les éléments DCS virtuels respectifs (27-29),
- exécuter des commandes de simulation en laissant fonctionner les éléments DCS virtuels et les dispositifs de serveurs virtuels pour créer des résultats de simulation ; et
- télécharger les parties du logiciel d'automatisation spécifique au serveur et/ou des données d'automatisation spécifiques au serveur (23-25) nécessaires pour le fonctionnement des éléments DCS depuis les dispositifs de serveurs virtuels (10-12) dans les éléments DCS respectifs (40, 42, 34-38).

2. Système selon la revendication 1, dans lequel le client technique est exécuté sur une machine virtuelle dans le système de traitement de données à distance (1, 2).

3. Système selon la revendication 2, lequel est agencé pour actualiser le logiciel d'automatisation spécifique au serveur et/ou les données d'automatisation spécifiques au serveur (23-25) en fonction des résultats de simulation.

4. Système selon l'une quelconque des revendications précédentes, le système étant agencé pour recouvrer une actualisation du nombre et des types des serveurs de système d'automatisation (50-54) et/ou des données techniques chaque fois que l'actualisation est possible ou à des intervalles de temps prédéfinis.

5. Système selon l'une quelconque des revendications précédentes, dans lequel l'au moins un système de traitement de données à distance (1, 2) comprend en outre une machine virtuelle de simulation (26) contenant un environnement d'exécution d'un modèle de simulation du processus de production (32) de l'installation industrielle.

6. Système selon l'une quelconque des revendications précédentes, le système étant agencé pour recouvrer une copie d'une actualisation du modèle de simulation, chaque fois que l'actualisation est disponible ou à des intervalles de temps prédéfinis, et charger l'actualisation dans la machine virtuelle de simulation (7).

7. Système selon l'une quelconque des revendications précédentes, dans lequel le type de l'au moins un serveur de système d'automatisation est l'un d'un serveur de connectivité (52-54), d'un serveur de base de données (51) ou d'un serveur d'application (50).

8. Système selon l'une quelconque des revendications précédentes, dans lequel le DCS comprend en outre au moins une interface de communication (41, 43) de l'un des au moins deux dispositifs de commande industrielle (40, 42).

9. Système selon l'une quelconque des revendications précédentes, le système étant agencé pour mettre en mode suspendu l'un quelconque des dispositifs de serveurs virtuels, des éléments DCS virtuels ou de la machine virtuelle de simulation et/ou les mémoriser dans une unité de mémorisation de données appartenant au système de traitement de données à distance.

10. Procédé de mise en service automatisée d'un système d'automatisation industrielle, le système d'automatisation industrielle comprenant :
- un système de commande distribuée DCS (30) ayant comme éléments au moins deux dispositifs de commande industrielle (40, 42), chacun d'eux étant agencé pour commander le fonctionnement d'une partie respective d'une installation industrielle durant un processus de production (32), et au moins un moyen de transmission de données (34-38) agencé pour connecter chacun des au moins deux dispositifs de commande industrielle (40, 42) à la partie respective de l'installation industrielle, et
- des serveurs de système d'automatisation (50-54) agencés comme un dispositif informatique physique ou un dispositif logiciel virtuel, chacun des serveurs de système d'automatisation (50-54) étant dédié à un aspect opérationnel spécifique du DCS (30) ;
exécutant dans un système de traitement de données à distance (1, 2) installé en dehors de l'installation industrielle les étapes suivantes :
- la fourniture pour chaque type possible de serveurs de système d'automatisation (50-54) d'un modèle de dispositif virtuel correspondant (67-69) basé sur une machine virtuelle sur laquelle le matériel virtualisé, le système d'exploitation et le logiciel de serveur relatif à l'aspect opérationnel spécifique du type de serveur de système d'automatisation respectif sont préinstallés, et
- le recouvrement du nombre et des types des serveurs de système d'automatisation (50-54) du système d'automatisation industrielle,
- l'instanciation à partir des modèles de dispositif virtuel (67-69) ou la disposition de dispositifs de serveurs virtuels (10-12) de telle sorte qu'ils correspondent en nombre et en types aux nombre et types recouvrés,
- l'établissement d'une connexion de données entre un client technique (14 ; 13) et les dispositifs de serveurs virtuels (10-12),
- l'acheminement d'informations d'entrée et de sortie entre une HMI connectée à distance (19), le client technique (14 ; 13) et les dispositifs de serveurs virtuels (10-12) pour créer dans les dispositifs de serveurs virtuels (10-12) un logiciel d'automatisation spécifique au serveur et/ou des données d'automatisation spécifiques au serveur (23-25) spécifiques au serveur,
- la conversion de chacun des dispositifs de serveurs virtuels (10-12) en une image informatique physique correspondante ou en un format de machine virtuelle utilisé par les dispositifs logiciels virtuels des serveurs de système d'automatisation (50-54),
- le téléchargement de chaque dispositif de serveur virtuel converti dans un serveur correspondant des serveurs de système d'automatisation (50-54),
- le téléchargement du logiciel d'automatisation spécifique au serveur et/ou des données d'automatisation spécifiques au serveur (23-25) dans une unité de mémorisation de données à distance (15) ;
**caractérisé par** les étapes suivantes
- la fourniture pour chaque type possible des éléments DCS (40, 42, 34-38) d'un modèle de machine virtuelle correspondant qui émule (61-63, 71-73) le type d'élément DCS respectif,
- le recouvrement des données techniques (15 ; 22) du système d'automatisation industrielle à partir du client technique (14 ; 13), dans lequel les données techniques comprennent au moins le nombre, les types et les informations de configuration de communication des éléments DCS (40, 42, 34-38),
- l'instanciation à partir des modèles de machine virtuelle associés (71-73, 61-63) ou la disposition d'éléments DCS virtuels (27-29) de telle sorte qu'ils correspondent en nombre et en types aux données techniques (15 ; 22),
- l'établissement de connexions de communication entre les dispositifs de serveurs virtuels (10-12) et les éléments DCS virtuels (27-29) en fonction des informations de configuration de communication des données techniques (15 ; 22)
- le téléchargement de parties du logiciel d'automatisation spécifique au serveur et/ou des données d'automatisation spécifiques au serveur (23-25) nécessaires pour le fonctionnement des éléments DCS depuis les dispositifs de serveurs virtuels (10-12) dans les éléments DCS virtuels respectifs (27-29),
- l'exécution de commandes de simulation en laissant fonctionner les éléments DCS virtuels et les dispositifs de serveurs virtuels pour créer des résultats de simulation ; et
- le téléchargement des parties du logiciel d'automatisation spécifique au serveur et/ou des données d'automatisation spécifiques au serveur (23-25) nécessaires pour le fonctionnement des éléments DCS depuis les dispositifs de serveurs virtuels (10-12) dans les éléments DCS respectifs (40, 42, 34-38).

11. Procédé selon la revendication 10, dans lequel le client technique est fourni sur une machine virtuelle dans le système de traitement de données à distance (1, 2).

12. Procédé selon l'une quelconque des revendications précédentes, 10 ou 11, dans lequel les dispositifs de serveurs virtuels (10-12) et/ou les éléments DCS virtuels (27-29) sont maintenus en mode suspendu après l'instanciation.
